## Europäisches Patentamt
## European Patent Office
## Office européen des brevets

(19)

(11) Veröffentlichungsnummer: **0 037 101**
**B1**

(12)

# EUROPÄISCHE PATENTSCHRIFT

(45) Veröffentlichungstag der Patentschrift:
**08.08.84**

(51) Int. Cl.³: **B 65 D 77/20**

(21) Anmeldenummer: **81102332.4**

(22) Anmeldetag: **27.03.81**

(54) **Mehrschichtfolie und Vorrichtung zum Verschluss von Gefässen.**

(30) Priorität: **29.03.80 DE 3012342**

(43) Veröffentlichungstag der Anmeldung:
**07.10.81 Patentblatt 81/40**

(45) Bekanntmachung des Hinweises auf die Patenterteilung:
**08.08.84 Patentblatt 84/32**

(84) Benannte Vertragsstaaten:
**BE CH FR GB LI NL**

(56) Entgegenhaltungen:
**BE - A - 643 767**
**CH - A - 420 969**
**DE - A - 2 111 886**
**FR - A - 1 159 873**
**FR - A - 2 294 838**
**FR - A - 2 457 768**
**GB - A - 1 363 765**
**US - A - 4 211 338**

(73) Patentinhaber: **Scheuch Folien- u.Papierverarbeitung GmbH & Co. KG, Rheinstrasse 48, D-6109 Mühltal 1 (DE)**

(72) Erfinder: **Schwinn, Georg, Undergasse 24, D-6109 Mühltal 3 (DE)**

(74) Vertreter: **Felgel-Farnholz, Richard, Dr.-Ing., Heidelberger Landstrasse 1, D-6100 Darmstadt-Eberstadt (DE)**

BUNDESDRUCKEREI BERLIN

**Beschreibung**

Die Erfindung bezieht sich auf eine Mehrschichtfolie für den Verschluß von Gefäßen, wie Bechern, Flaschen und dgl. mittels einer schon bei Raumtemperatur durch Druck siegelfähigen Schicht, welche aus einer Trägerschicht und einer darauf haftenden Permanentklebeschicht besteht.

Mehrschichtfolien für derartige Verwendungszwecke sind an sich schon seit langem bekannt.

In der belgischen Patentschrift 643 767 wird eine Mehrschichtfolie beschrieben, bei welcher auf einer Trägerfläche eine Klebeschicht und auf dieser eine poröse Papierschicht angeordnet sind. Wenn auf diese poröse Schicht eine Deckschicht unter Druck aufgepreßt wird, dann tritt das Material der Klebeschicht auf die Außenseite der porösen Schicht und verbindet diese mit der Deckschicht. Es wird also eine in einem Lager vorrätig gehaltene 3-Schicht-Folie im Bedarfsfall mit einer Deckschicht verbunden.

Es ist ferner durch die französische Patentschrift 1 159 873 bekannt, zum Verschließen von Gefäßen eine Folie zu verwenden, welche auf der Innenseite eine thermoplastische Schicht trägt, um die Verbindung mittels Wärmezufuhr und Druck herzustellen.

Aus der schweizerischen Patentschrift 420 969 ist es bekannt, daß beim Verschluß eines Gefäßes entweder aus dem Behälterkörper oder aus dem Behälterdeckel ein thermoplastischer Klebstoff durch Schlitze oder Einschnitte hindurchgepreßt wird und dann durch Anwendung von Druck und Erhitzen die beiden Teile verbunden und nach Aushärten des Klebemittels die Verbindungsstelle völlig abgedichtet wird.

Die US Patentschrift 4 211 338 zeigt den Verschluß eines vorzugsweise aus Metallfolie bestehenden Gefäßes mittels entweder Klebemittel oder Heißversiegelung.

Die Erfindung hat sich zur Aufgabe gestellt, eine besonders zweckmäßig zusammengesetzte mehrschichtige Folienbahn anzugeben, welche preiswert herzustellen ist und durch die Eigenart ihrer Zusammensetzung es ermöglicht, in besonders kurzer Zeit mit einfachen Mitteln ohne Zufuhr thermischer Energie einen dichten Verschluß herzustellen.

Diese Aufgabe wird bei einer Mehrschichtfolie der eingangs genannten Art dadurch gelöst, daß die Permanentklebeschicht auf der von der als Trägerschicht dienenden Aluminiumschicht abgewendeten Seite eine bei Raumtemperatur nicht klebende und die Permanentklebeschicht durchgehend und geschlossen abdeckende Schutzschicht aus einem bei Raumtemperatur spröden, zerbrechlichen Material aufweist.

Es ist zweckmäßig, zum Verschließen von Gefäßen eine Vorrichtung zu verwenden, bei welcher die der Trägerfolie zugewendete Stirnseite des Stempels, welcher dabei die Mehrschichtfolie gegen den Rand des zu verschließenden Gefäßes drückt, mit einer strukturierten Oberfläche, vorzugsweise mit um die Öffnung des Gefäßes umlaufenden Rillen bzw. Rippen versehen ist. Es zeigt

Fig. 1 eine Mehrschichtfolie gemäß der Erfindung;

Fig. 2 die Anwendung einer erfindungsgemäßen Mehrschichtfolie zum Verschließen eines Gefäßes, im Schnitt;

Fig. 3 in vergrößertem Maßstab als Detail einen Querschnitt durch eine mit einer erfindungsgemäßen Mehrschichtfolie versiegelte Randzone eines verschlossenen Gefäßes nach Fig. 2.

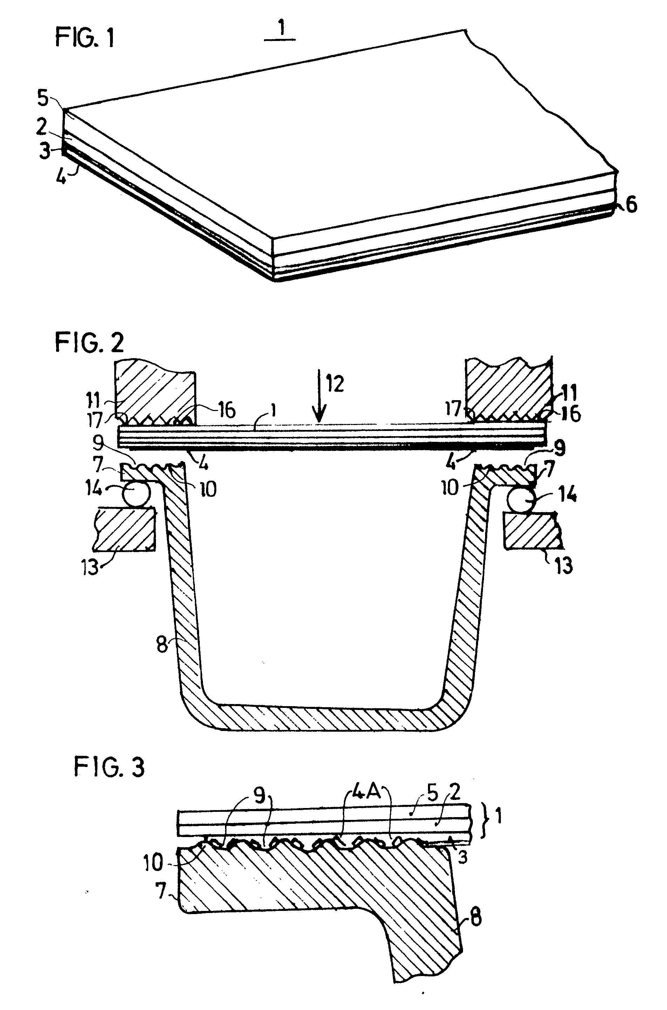

Die in Fig. 1 schematisch vereinfacht dargestellte, erfindungsgemäß ausgebildete Mehrschichtfolie 1 besteht aus einer als Trägerfolie dienenden Aluminiumschicht 2 von etwa 50 μ Stärke, die auf ihrer dem zu verschließenden Gefäß zugewendeten Seite eine Permanentklebeschicht 3 von etwa 25 μ Stärke trägt, die vorzugsweise aus einem Latexkleber besteht. Auf der von der Aluminiumschicht 2 abgewendeten Seite der Permanentklebeschicht 3 ist eine bei Raumtemperatur nicht klebende Schutzschicht 4 aus sprödem Material angeordnet. Als Material für die Schutzschicht 4 kommen vorzugsweise Hartparaffin oder Kunstharz in Frage.

Auf der von der Permanentklebeschicht 3 abgewendeten Seite der Aluminiumschicht 2 ist diese mit einer Papierschicht 5 aus Natronpapier von 50—100 μ Stärke kaschiert, wodurch die Steifigkeit der Mehrschichtfolie erhöht wird.

Eine Polyolefinschicht 6, die zweckmäßigerweise zwischen Aluminiumschicht 2 und Permanentklebeschicht 3 angeordnet ist, dient zur Erhöhung der angestrebten Plastizität der Mehrschichtfolie. Die Bedeutung dieser Plastizität wird in Verbindung mit Fig. 2 noch erwähnt.

In Fig. 2 ist schematisch das Verschließen eines Gefäßes mit einer erfindungsgemäß ausgebildeten Mehrschichtfolie 1 dargestellt. Der Rand 7 des zu verschließenden Gefäßes 8 besitzt eine strukturierte Oberfläche, und zwar um die Öffnung des Gefäßes 8 umlaufende, kreisförmige Rillen 9 bzw. zwischen diesen Rillen umlaufende Rippen 10.

Zum Verschließen des Gefäßes wird die Mehrschichtfolie 1 durch den ringförmigen Stempel 11 in Richtung des Pfeiles 12 auf den Rand 7 des zu verschließenden Gefäßes 8 gedrückt. Hierbei ist es zweckmäßig, wenn der nach außen vorspringende Rand 7 durch entsprechende Abstützungen 13 gegen den Druck des Stempels 11 abgestützt ist. In dem Ausführungsbeispiel der Fig. 2 ist zwischen der Unterseite des vorspringenden Randes 7 und der Abstützung 13 eine elastische Zwischenlage 14, z. B. ein Gummiring, angeordnet.

Wird die Mehrschichtfolie fest gegen den Rand des zu verschließenden Gefäßes gedrückt, dann wird die Mehrschichtfolie in ihrem dem Rand 7 des Gefäßes 8 zugewendeten Bereich plastisch verformt; hierbei zerbricht die dünne spröde Schutzschicht 4, und Teile der Permanentklebeschicht 3 kommen in direkte Berührung mit dem Rand 7. Damit wird in sehr einfacher, aber wirkungsvoller Weise ein allen praktischen Anforderungen entsprechender Verschluß des Gefäßes 8 erzielt. Eine zwischen Permanentklebeschicht 3 und Aluminiumschicht 2 angeordnete Polyolefinschicht 6 erhöht die Plastizität in gewünschter Weise. Durch die strukturierte Oberfläche der Oberseite des Randes 7 wird das Zerbrechen der Schutzschicht 4 unterstützt.

Fig. 3 zeigt in schematisch vereinfachter Darstellung den Rand des verschlossenen Gefäßes bei Beendigung des Verschlußvorganges. Die Schutzschicht 4 ist in einzelne Teile 4A zerbrochen, und die Permanentklebeschicht 3 ist mit der zugewendeten Oberseite des Randes 7 in direktem Kontakt.

In den Figuren 2 und 3 ist der besseren Deutlichkeit halber die Strukturierung des Randes etwas übertrieben dargestellt und in Fig. 3 keine Polyolefinschicht gezeichnet.

Es hat sich als zweckmäßig erwiesen, wenn die Trägerfolie aus Aluminium eine Stärke von wenigstens 20 µm, höchstens jedoch 70 µm, bevorzugt etwa 50 µm hat.

Will man die Plastizität der Mehrschichtfolie erhöhen, dann empfiehlt es sich — wie in Fig. 1 angedeutet — zwischen Aluminiumschicht 2 und Permanentklebeschicht 3 eine Polyolefinschicht 6 von wenigstens 20 µm und höchstens 50 µm anzuordnen.

Es hat sich als vorteilhaft erwiesen, wenn die Permanentklebeschicht eine Stärke von wenigstens 5 µm, höchstens 40 µm, vorzugsweise 25 µm hat.

In manchen Fällen kann es zweckmäßig sein, auf der von der Schutzschicht 4 abgewendeten Seite der Aluminiumschicht 2 bzw. der damit kaschierten Papierschicht 5 eine Abhäsivschicht anzuordnen.

Um das Zerbrechen der bei Raumtemperatur spröden Schutzschicht 4 zu erleichtern, kann die der Trägerschicht zugewendete Stirnseite des zum Verschluß von Gefäßen verwendeten Stempels 11 mit einer strukturierten Oberfläche, vorzugsweise mit um die Öffnung des Gefäßes umlaufenden Rillen 16 bzw. Rippen 17 versehen werden. Dies ist insbesonders nützlich, wenn die Randzone des Gefäßes nur stark abgerundete Rippen 10 und/oder Rillen 9 aufweist.

Gegenüber mancher bekannter Verschließungstechnik wird Energie eingespart, weil beim Verschließen keine wesentliche Zufuhr thermischer Energie notwendig ist.

## Patentansprüche

1. Mehrschichtfolie (1) für den Verschluß von Gefäßen (8), wie Bechern, Flaschen und dgl. mittels einer schon bei Raumtemperatur durch Druck siegelfähigen Schicht, welche aus einer Trägerschicht (2) und einer darauf haftenden Permanentklebeschicht (3) besteht, dadurch gekennzeichnet, daß die Permanentklebeschicht (3) auf der von der als Trägerschicht dienenden Aluminiumschicht (2) abgewendeten Seite eine bei Raumtemperatur nicht klebende und die Permanentklebeschicht (3) durchgehend und geschlossen abdeckende Schutzschicht (4) aus einem bei Raumtemperatur spröden, zerbrechlichen Material aufweist.

2. Mehrschichtfolie nach Anspruch 1, dadurch gekennzeichnet, daß die Schutzschicht aus Hartparaffin oder Kunstharz besteht.

3. Mehrschichtfolie nach Anspruch 1, dadurch gekennzeichnet, daß die Aluminiumschicht (2) auf der Außenseite mit einer Papierschicht (5), vorzugsweise sogenanntem Natronpapier von 50—100 µm Stärke, kaschiert ist.

4. Mehrschichtfolie nach Anspruch 1, dadurch gekennzeichnet, daß sie auf der von der Permanentklebeschicht (3) abgewendeten Seite mit einer Dehäsivschicht abgedeckt ist.

5. Mehrschichtfolie nach Anspruch 1, dadurch gekennzeichnet, daß die Trägerfolie aus Aluminium mit einer Stärke von wenigstens 20 µ und höchstens 70 µm, vorzugsweise etwa 50 µ, besteht.

6. Mehrschichtfolie nach Anspruch 1, dadurch gekennzeichnet, daß zwischen Aluminiumschicht (2) und der Permanentklebeschicht (3) eine Polyolefinschicht (6), vorzugsweise von wenigstens 20 µm und höchstens 50 µm Stärke, zur Erhöhung der Plastizität der Mehrschichtfolie angeordnet ist.

7. Mehrschichtfolie nach Anspruch 1, dadurch gekennzeichnet, daß die Permanentklebeschicht (3) eine Stärke von wenigstens 5 µm und höchstens 40 µm, vorzugsweise etwa 25 µm, hat.

8. Vorrichtung zum Verschließen von Gefäßen mittels einer Mehrschichtfolie nach Anspruch 1, dadurch gekennzeichnet, daß die der Trägerfolie zugewendete Stirnseite des Stempels mit einer strukturierten Oberfläche, vorzugsweise mit um die Öffnung des Gefäßes umlaufenden Rillen (9) bzw. Rippen (10), versehen ist.

## Claims

1. Multilayer laminate (1) for sealing receptacles (8), as cups, bottles and things like that by means of a layer already at room temperature sealable with the aid of pressure consisting of a substrate (2) to which is applied a permanently activated adhesive coating (3), characterised in that on that side of the permanently activated adhesive coating (3) which is opposite to the substrate and which consists of an aluminium foil (2) there is a protective layer (4) not sticking at room temperature and consisting of a material being at room temperature brittle and fragile, which completely convers the permanently activated adhesive coating.

2. Multilayer laminate according to claim 1 characterised in that the protective layer consists of hard paraffin or synthetic resin.

3. Multilayer laminate according to claim 1,

characterised in that the aluminium foil (2) has on its outside a paper web (5) preferably of sulfate paper of 50—100 µm thickness.

4. Multilayer laminate according to claim 1, characterised in that on the side of the laminate being opposite to the permanently activated coating (3) it is covered by a release coating.

5. Multilayer laminate according to claim 1, characterised in that the substrate consists of aluminium of at least 20 µm, not more than 70 µm, preferably of about 50 µm thickness.

6. Multilayer laminate according to claim 1, characterised in that for the purpose of increasing the plasticity there is located a polyolefin layer (6) preferably of at least 20 µm and not more than 50 µm between the substrate of aluminium (2) and the permanently activated adhesive coating (3).

7. Multilayer laminate according to claim 1, characterised in that the permanently activated adhesive coating (3) has a thickness of at least 5 µm, not more than 40 µm, preferably about 25 µ.

8. Device for sealing receptacles by means of a multilayer laminate according to claim 1, characterised in that the front-side of the die which is facing the substrate has a structurised surface preferably with grooves (9) or ribs (10) surrounding the opening of said receptable.

## Revendications

1. Feuille multicouche (1) pour la fermeture de récipients (8) tels que gobelets, bouteilles et objets similaires, au moyen d'une couche de scellement sensible à la pression déjà à température ambiante, laquelle se compose d'une couche support (2) et d'une couche de colle permanente (3) y adhérant, caractérisée en ce que la couche de colle permanente (3), du côté opposé à celui où se trouve la feuille support d'aluminium (2), est recouverte d'une couche de protection (4), noncollante à température ambiante, fermée et continue, constituée par un matériau cassant et friable à température ambiante.

2. Feuille multicouche suivant revendication 1, caractérisée en ce que la couche de protection (4) est faite de paraffine dure ou de résine synthétique.

3. Feuille multicouche suivant revendication 1, caractérisée en ce que la feuille d'aluminium (2) est recouverte sur sa face extérieure d'une feuille de papier (5), de préférence d'un papier couché à la soude, de 50 à 100 µm d'épaisseur.

4. Feuille multicouche suivant revendication 1, caractérisée en ce que la feuille multicouche est recouverte d'une couche déhésive sur le côté opposé à la couche de colle permanente (3).

5. Feuille multicouche suivant revendication 1, caractérisée en ce que la couche support est faite d'aluminium d'une épaisseur d'au moins 20 µm et d'au plus 70 µm, de préférence d'environ 50 µm.

6. Feuille multicouche suivant revendication 1, caractérisée en ce que une feuille de polyoléfine (6) est intercalée entre la feuille d'aluminium (2) et la couche de colle permanente (3) pour augmenter la plasticité de la feuille multicouche, ladite feuille de polyoléfine ayant de préférence une épaisseur d'au moins 20 µm et d'au plus 50 µm.

7. Feuille multicouche suivant revendication 1, caractérisée en ce que la couche de colle permanente (3) a une épaisseur d'au moins 5 µm et d'au plus 40 µm, de préférence d'environ 25 µm.

8. Dispositif pour la fermeture de récipients à l'aide d'une feuille multicouche suivant revendication 1, caractérisé en ce que le front de la matrice faisant face à la couche support a une surface structurée, de préférence comprenant des rainures (9) et des nervures (10) entourant l'orifice du récipient.

FIG. 1

FIG. 2

FIG. 3